# EUROPEAN PATENT SPECIFICATION

(11) **EP 3 127 460 B1**
(45) Date of publication and mention of the grant of the patent: **26.01.2022**
(21) Application number: 16181682.2
(22) Date of filing: 28.07.2016
(51) Int. Cl.: A47J 43/07, A47J 43/08

(54) **IMPROVED CHOPPER SEALING DUE GEOMETRY "SEALING AREA" MODIFICATIONS**
VERBESSERTE ZERHACKERABDICHTUNGSGEOMETRIE-VERSCHLUSSBEREICH-MODIFIKATIONEN
AMÉLIORATION DE L'ÉTANCHÉITÉ DE HACHEUR SUITE À UNE MODIFICATION DE LA GÉOMÉTRIE DE LA « ZONE D'ÉTANCHÉITÉ »

(30) Priority: 03.08.2015 SI 201500184
(43) Date of publication of application: 08.02.2017
(73) Proprietor: BSH Hausgeräte GmbH, 81739 München (DE)
(72) Inventor: Berzelak, Matej, 3333 Ljubno (SI); Kovacec, Bostjan, 1420 Trbovlje (SI); Pesec, Jurij, 3301 Petrovce (SI)

(56) References cited:
- EP-A1- 2 881 023
- WO-A1-2011/064080
- CN-U- 202 295 795
- GB-A- 2 349 929
- US-A1- 2002 109 354

## Description

### BACKGROUND OF THE INVENTION

The present invention is relating to the field of sealing in kitchen appliances, specifically solutions for sealing processing vessels at elevated temperatures close to boiling.

### PRIOR ART

In various kitchen devices, such as mixers, blenders, choppers and similar that do not include heating functions, the sealing is implemented with standard sealing rings and similar solutions in order to prevent the leaking of the liquid (processed) ingredients. These sealing solutions, see for example EP 2 881 023, are generally not optimal when the temperature of the ingredients is elevated or rises during the processing phase.

This causes expansion of the air in the processing vessel and when the inner processing compartments is closed, that is separated from the outer environment with no opening on top, pressure starts increasing. The raised pressure causes additional difficulties on desired sealing. Combination of dynamic flows and raised pressure usually leads to leakage.

### OBJECT UNDERLYING THE INVENTION

The object underlying the present invention is to provide a sealing for a kitchen device that improves the sealing of the kitchen device in the circumstances of increased temperatures, specifically in the region above 50 degrees C and below the boiling point.

### SOLUTION ACCORDING TO THE INVENTION

In order to achieve the object underlying the invention, the present invention provides a sealing for a kitchen device as defined in claim 1. As a second aspect of the invention, a kitchen device is provided as defined in claim 7. Advantageous embodiments that can be implemented by themselves or in combination are described in dependent claims.

The solution according to the invention is achieved through a sealing for a kitchen appliance, wherein the radial cross-section of sealing is wedge-shaped, the wedge angle being from 1 to 20 degrees, preferably 5 to 10 degrees, with the thickness of the sealing reducing with increasing radius of the sealing. The wedged-shape sealing ensures that upon the increase of the pressure within the processing bowl, the kitchen appliance is better able to resist leakage. The increased pressure may even increase the sealing capabilities of the seal as the increased pressure pushes the sealing firmily toward the walls of the processing bowl and sealing holder.

### EMBODIMENTS OF THE INVENTION

In a preferred embodiment, the sealing is wedged in radial direction between the processing bowl and the sealing holder so as to provide additional support when the pressure is increased within the processing bowl. By wedging the sealing between the processing bowl and the sealing holder, the wedged shape of the sealing is utilized to resist an increase in the pressure from within the processing bowl and better prevent leakage.

In an advantageous solution, the sealing provides additional sealing force for the prevention of leaking of the ingredients within the processing bowl when the temperature within the processing bowl is increased up to, but below the boiling point, specifically between 50 and 99 deg. C. The seal is designed to withstand the moderate increases in pressure before the ingredients reach boiling point. For protection from leakage at higher temperature and pressures, more sophisticated prevention measures must be used, however these result in higher production costs.

It is conceivable that said wedge-shape is not linear, the wedge andgle α not being constant throughout the entire radial cross-section of the sealing. In some embodiments it may be beneficial to implement varying angles through the cross section of the wedge-shaped sealing to achieve the best possible sealing effect.

Further, it is conceivable that said wedge-shape is changing in shape and/or size in different regions of the circumference of the sealing. The presented embodiments are in no way intended to restrict the possible shapes of the sealing used according to this invention. In various embodiments, it can be beneficial to implement various shapes of the wedge-shaped sealing to achieve the best possible sealing effect.

The preferred embodiment has the said radial cross-section of the sealing in the shape of a tinsel. The tinsel shape of the sealing can be beneficial through a softer gripping of the sealing when the processing bowl is attached and it can reduce producing costs through the lower quantity of the used material.

### BRIEF DESCRIPTION OF THE DRAWINGS

The invention is explained in more detail below on the basis of an exemplary embodiment and with reference to schematic drawings in which:
- Fig. 1: shows the kitchen appliance, specifically a chopping attachment;
- Fig. 2: shows a wedge-shaped geometry with Tinsel sealing ring;
- Fig. 3: shows a wedge-shaped geometry with a smooth sealing ring.

### DETAILED DESCRIPTION OF THE INVENTION

Advantageous embodiments and developments which can be used individually or in combination with one another are the subject matter of the dependent claims.

Features described in the claims and in the description can have relevance to the presented invention either by themselves or in any combination thereof.

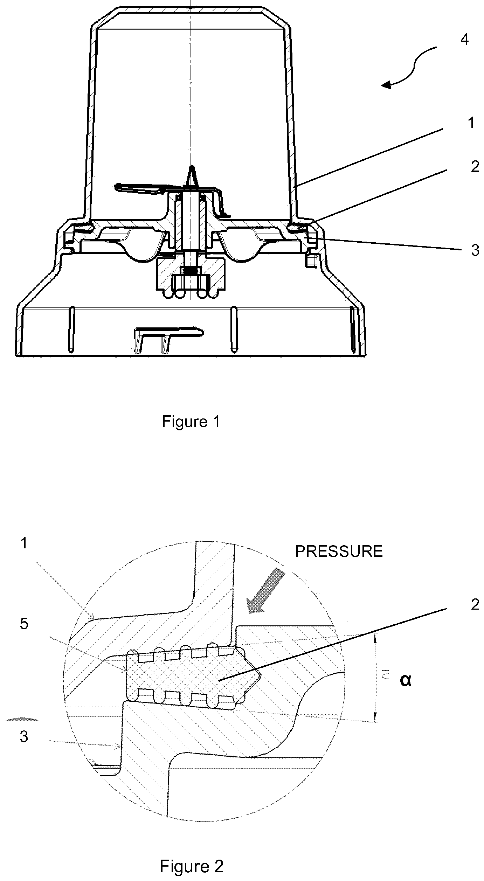

Figure 1 shows a kitchen device 4, specifically a mini chopper, with the positioning of the sealing 2 between the sealing holder 3, which is essentially the base with a drive for the blade and the processing bowl 1. The sealing 2 rests on the sealing holder 3 on its entire circumference. It is secured in place through its elasticity. On top of the sealing holder 3 fitted with the sealing 1, the processing bowl 1 is attached, preferably through the rotational fixing mechanism or alternatively in a click-on manner. The processing bowl 1 effectively also represents a lid. Attachment of the processing bowl 1 results in the sealing 2 being pressed so that the inner processing compartment is effectively sealed.

Figure 2 depicts a wedge-shaped geometry with a tinsel-shaped sealing ring. The wedge shaped sealing 2 is constructed in such a way, that the cross-section of the sealing 2 in the radial direction from the center of the sealing 2, that is in the direction from the center of the rotation of the blade of the kitchen device 4, is shaped in a way, that the thickness of the sealing 2 gradually decreases with increasing radial distance from the said center of rotation of the blade. This effectively results in a wedge shape. Consequently, when the processed ingredients within the processing bowl 1 are hot, specifically, the temperature in higher than 50 deg C and below the boiling point, the resulting increase in the pressure within the processing bowl 1 is insufficient to displace the sealing 2 from the sealing holder 3 to result in leaking of the ingredients and/or air from the processing bowl 1. The wedge-shaped sealing 2 becomes wedged between the sealing holder 3 and the processing bowl 1. In the presented embodiment, the wedge angle α is 10 degrees. However, the angle may be between 1 and 20 degrees, preferably between 5 and 10 degrees. Also, various embodiments are conceivable where the wedge shape is not linear and the wedge angle α varies throughout the width of the sealing 2 as well as throughout the circumference of the sealing 2. It is also conceivable that the cross-section of the sealing 2 may vary in size and shape throughout the circumference of the sealing 2. The tinsel 5 shape of the sealing 2, as presented in Figure 2 can be beneficial through a softer gripping of the sealing 2 when the processing bowl 1 is being attached and it can reduce producing costs through the lower quantity of the used material.

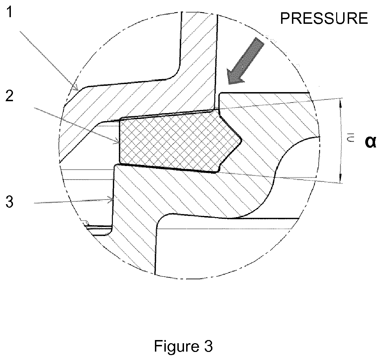

Finally, Figure 3 shows another embodiment where the sealing 2 is wedge-shaped as well, the wedge-angle α being the same as in Figure 2, however the sealing 2 is not shaped as a tinsel 5 but as a single block. This may be implemented in solutions where harder materials are required to counteract stronger pressures within the processing bowl 1, for example when the temperatures within the processing bowl 1 approach boiling.

### Feature list

- 1: Processing bowl
- 2: Sealing
- 3: Sealing Holder
- 4: Kitchen device
- 5: Tinsel shape
- α: wedge angle

## Claims

1. A sealing (2) for a kitchen appliance (4), **characterized in that** the radial cross-section of sealing (2) is wedge-shaped, the wedge angle α being from 1 to 20 degrees, preferably 5 to 10 degrees, with the thickness of the sealing (2) reducing with increasing radius of the sealing (2).

2. The sealing (2) according to claim 1, **characterized in that** the sealing (2) is wedged in radial direction between the processing bowl (1) and the sealing holder (3) so as to provide additional support when the pressure is increased within the processing bowl (1).

3. The sealing (2) according to claims 1 or 2, **characterized in that** the sealing (2) provides additional sealing force for the prevention of leaking of the ingredients within the processing bowl (1) when the temperature within the processing bowl (1) is increased up to, but below the boiling point, specifically between 50 and 99 deg. C.

4. The sealing (2) according to any of the previous claims, **characterized in that** said wedge-shape is not linear, the wedge angle α not being constant throughout the entire radial cross-section of the sealing (2).

5. The sealing (2) according to any of the previous claims, **characterized in that** said wedge-shape is changing in shape and/or size in different regions of the circumference of the sealing (2).

6. The sealing (2) according to any of the previous claims, **characterized in that** said radial cross-section of the sealing is in the shape of a tinsel (5).

7. A kitchen device comprising the sealing according to any of the previous claims.

## Patentansprüche

1. Dichtung (2) für ein Küchengerät (4), **dadurch gekennzeichnet, dass** der radiale Querschnitt der Dichtung (2) keilförmig ist, wobei der Keilwinkel α 1 bis 20 Grad, vorzugsweise 5 bis 10 Grad beträgt und sich die Dicke der Dichtung (2) mit zunehmendem Radius der Dichtung (2) verringert.

2. Dichtung (2) nach Anspruch 1, **dadurch gekennzeichnet, dass** die Dichtung (2) in radialer Richtung zwischen den Arbeitsbehälter (1) und den Dichtungshalter (3) geklemmt ist und so für zusätzlichen Halt sorgt, wenn sich der Druck in dem Arbeitsbehälter (1) erhöht.

3. Dichtung (2) nach Anspruch 1 oder 2, **dadurch gekennzeichnet, dass** die Dichtung (2) zum Vermeiden eines Austretens der Zutaten in dem Arbeitsbehälter (1) für eine zusätzliche Dichtkraft sorgt, wenn die Temperatur in dem Arbeitsbehälter (1) bis zum Siedepunkt, jedoch darunter, insbesondere auf 50 bis 99 Grad C, steigt.

4. Dichtung (2) nach einem der vorhergehenden Ansprüche, **dadurch gekennzeichnet, dass** die Keilform nicht linear ist, wobei der Keilwinkel α nicht über den gesamten radialen Querschnitt der Dichtung (2) konstant ist.

5. Dichtung (2) nach einem der vorhergehenden Ansprüche, **dadurch gekennzeichnet, dass** die Keilform in verschiedenen Bereichen des Umfangs der Dichtung (2) ihre Form und/oder Größe ändert.

6. Dichtung (2) nach einem der vorhergehenden Ansprüche, **dadurch gekennzeichnet, dass** der radiale Querschnitt der Dichtung die Form von Lahn (5) aufweist.

7. Küchenvorrichtung mit der Dichtung nach einem der vorhergehenden Ansprüche.

## Revendications

1. Joint d'étanchéité (2) destiné à un appareil de cuisine (4), **caractérisé en ce que** la section transversale radiale du joint d'étanchéité (2) est cunéiforme, l'angle de coin α étant de 1 à 20 degrés, de préférence de 5 à 10 degrés, avec l'épaisseur du joint d'étanchéité (2) se réduisant avec l'accroissement du rayon du joint d'étanchéité (2).

2. Joint d'étanchéité (2) selon la revendication 1, **caractérisé en ce que** le joint d'étanchéité (2) est calé dans la direction radiale entre le bol de traitement (1) et le porte-joint d'étanchéité (3) de façon à fournir un soutien additionnel lorsque la pression est augmentée à l'intérieur du bol de traitement (1).

3. Joint d'étanchéité (2) selon les revendications 1 ou 2, **caractérisé en ce que** le joint d'étanchéité (2) fournit une force de scellement additionnelle pour la prévention de fuite des ingrédients à l'intérieur du bol de traitement (1) lorsque la température à l'intérieur du bol de traitement (1) est augmentée jusqu'à, mais sous, le point d'ébullition, plus précisément entre 50 et 99°C.

4. Joint d'étanchéité (2) selon l'une quelconque des revendications précédentes, **caractérisé en ce que** ladite forme cunéiforme n'est pas linéaire, l'angle de coin α n'étant pas constant sur la totalité de la section transversale radiale du joint d'étanchéité (2).

5. Joint d'étanchéité (2) selon l'une quelconque des revendications précédentes, **caractérisé en ce que** ladite forme cunéiforme change en forme et/ou en taille dans différentes zones de la circonférence du joint d'étanchéité (2).

6. Joint d'étanchéité (2) selon l'une quelconque des revendications précédentes, **caractérisé en ce que** ladite section transversale radiale du joint d'étanchéité est de la forme d'une guirlande (5).

7. Dispositif de cuisine comprenant le joint d'étanchéité selon l'une quelconque des revendications précédentes.
